# EUROPÄISCHE PATENTANMELDUNG

(11) **EP 2 505 069 A2**
(43) Veröffentlichungstag der Anmeldung: **03.10.2012**
(21) Anmeldenummer: 12159432.9
(22) Anmeldetag: 14.03.2012
(51) Int. Cl.: A23C 3/033, A23L 2/46, A23L 3/18

(54) **Getränkeerhitzungssystem mit integrierter Verbrennungsanlage und Verfahren zum Erhitzen von Getränken**

(30) Priorität: 01.04.2011 DE 102011006653
(71) Anmelder: Krones AG, 93073 Neutraubling (DE)
(72) Erfinder: Zacharias, Jörg, 93096 Köfering (DE); Feilner, Roland, 93055 Regensburg (DE)
(74) Vertreter: Grünecker, Kinkeldey, Stockmair & Schwanhäusser

(57) **Zusammenfassung**

Die Erfindung betrifft ein Erhitzungssystem für eine Getränkeverarbeitungsanlage mit einem Getränkestrom aus einem zu verarbeitendem Getränk, mit einem Sekundärstrom aus einem Wärmeleitmedium, wobei der Sekundärstrom in einem geschlossenen Sekundärkreislauf geführt ist, mit zumindest einem Wärmetauscher, der von dem Sekundärstrom durchflossen ist und so angeordnet ist, dass er in der Lage ist, Wärme an den Getränkestrom abzugeben, wobei eine Verbrennungsanlage in dem Sekundärstrom so angeordnet ist, dass von der Verbrennungsanlage erzeugte Wärme an das Wärmeleitmedium weitergebbar ist. Die Erfindung betrifft auch ein Verfahren zum Erhitzen von Getränken mit einer Verbrennungsanlage.

## Beschreibung

Die Erfindung betrifft ein Erhitzungssystem für eine Getränkeverarbeitungsanlage mit einem Getränkestrom aus einem zu verarbeitenden Getränk, mit einem Sekundärstrom aus einem Wärmeleitmedium, wobei der Sekundärstrom in einem Sekundärkreislauf geführt ist, mit zumindest einem Wärmetauscher, der von dem Sekundärstrom durchflossen ist und so angeordnet ist, dass er in der Lage ist, Wärme an den Getränkestrom abzugeben.

Aus dem Stand der Technik sind unterschiedliche Kurzzeiterhitzungs- und Ultrahocherhitzungssysteme bekannt, die in der Regel mit Platten- oder Röhrenwärmetauscher betrieben werden. Ein Röhrenwärmeüberträger ist beispielsweise aus der EP 2 157 390 A2 und der DE 10 2009 040558 A1 und aus der DE 696 12 998 C2 bekannt. Ein Plattenwärmetauscher ist beispielsweise aus der EP 1 462 752 B1 bekannt.

Üblicherweise wird der Sekundärstrom jedoch nur indirekt durch ein weiteres erhitztes Medium, wie beispielsweise Dampf, welches in einem Tertiärkreislauf geführt ist, erwärmt. Zum Wärmeübergang zwischen dem Tertiärstrom und dem Sekundärstrom bedarf es wiederum unterschiedlicher Wärmetauscherstufen bzw. Wärmetauschersektionen.

Allerdings führt jeder Einsatz von zusätzlichen Wärmetauschern zu einer Wirkungsgradverminderung, was unerwünscht ist.

Auch wird das in dem Tertiärkreislauf verwendete Wärmeleitmedium, normalerweise gesättigter Dampf, an einem dezentral, d. h. fern des Getränkestroms, vorhandenem Dampferzeuger zur Verfügung gestellt. Der Dampf muss dann über weite Strecken vom Dampferzeuger bis zum Erhitzungssystem zu dem Getränkestrom verbracht werden, was zu aufwändigen Isolierungen führt und trotz aller kostenintensiven Maßnahmen auch zu einem Temperaturabfall führt. Auch dies wirkt sich negativ auf den Wirkungsgrad der Gesamtanlage aus.

Die bisherigen Lösungen sind daher nicht optimal, um die Getränke, also die primären Medien, wie Säfte, Milch oder Wasser, zu be- und/oder zu verarbeiten.

Neben den Energieverlusten auf dem langen Weg von einer zentralen Station, wie einem Kesselhaus, wo das im Tertiärkreislauf verwendete Wärmeleitmedium erzeugt wird und den Wärmeübertragungs- bzw. Abstrahlverlusten, die zu den Wirkungsgradverlusten führen, ist derzeit auch noch ein erheblicher aparativer Aufwand durch lange Verrohrungen und Isolierungen zu beklagen.

Es ist die Aufgabe der vorliegenden Erfindung, hier eine Verbesserung zu bieten.

Diese Aufgabe wird erfindungsgemäß dadurch gelöst, dass eine Verbrennungsanlage in dem Sekundärstrom so angeordnet ist, dass von der Verbrennungsanlage erzeugte Wärme an das Wärmeleitmedium weitergebbar ist. Das Wärmeleitmedium wird somit von der integrierten Verbrennungsanlage direkt erzeugt und kann die in das Wärmeleitmedium eingebrachte Wärme über den zumindest einen Wärmetauscher an den Getränkestrom weitergeben.

Der Wirkungsgrad wird dadurch erheblich verbessert, der aparative Aufwand verringert und Energie-, Wärmeübertragungs- und Abstrahlverluste minimiert.

Ein solches Erhitzungssystem baut auch wesentlich kompakter als die bekannten Erhitzungssysteme.

Vorteilhafte Ausführungsformen sind in den Unteransprüchen beansprucht und werden nachfolgend näher erläutert.

So ist es von Vorteil, wenn die Verbrennungsanlage als Gastherme ausgebildet ist. Solche Gasthermen sind besonders flexibel in puncto sogenannter Start-und-Stopp-Zyklen sowie in der Regelung der Ausgangstemperatur. Solche Gasthermen sind auch in unterschiedlicher Ausprägung auf dem Markt günstig zu erstehen, beispielsweise von solchen Anbietern, die auch Gasthermen für Zentralheizungen anbieten, wie sie in einem Familienhaus auch eingesetzt werden.

Eine weitere vorteilhafte Ausgestaltung ist dadurch gekennzeichnet, dass eine Bypassleitung so an den Sekundärstrom angeschlossen ist, dass ein Teil des Wärmeleitmediums oder das gesamte Wärmeleitmedium an der Verbrennungsanlage so vorbeiführbar ist, dass es durch die Verbrennungsanlage unerwärmt bleibt. Bei einer solchen Ausgestaltung wird es möglich, abgekühltes Wärmeleitmedium unaufgewärmt weiter zu verwenden. Die Flexibilität in der Temperaturführung wird dadurch erhöht.

Es ist auch von Vorteil, wenn im Sekundärkreislauf ein Speicher und/oder ein Puffer vorhanden ist, in dem das durch die Verbrennungsanlage erwärmte Wärmeleitmedium, vorzugsweise vor Eintritt in den zumindest einen Wärmetauscher, zwischenspeicherbar und/oder pufferbar ist. Auf diese Weise muss nicht so häufig die Verbrennungsanlage eingesetzt werden und wenn die Verbrennungsanlage eingesetzt wird, so kann sie über einen längeren Zeitraum agieren. Dies führt zu einer Wirkungsgraderhöhung und senkt die Kosten beim Betreiben des Erhitzungssystems.

Es ist auch von Vorteil, wenn das Wärmeleitmedium Wasser, etwa Heißwasser, und/oder Dampf, etwa Sattdampf, ist.

Wenn zwei von dem Sekundärstrom durchflossene Wärmetauscher in Wirkeingriff mit dem Getränkestrom stehen, so ist es möglich, den Getränkestrom schonend zu erwärmen, nämlich über eine Vor- und eine Haupterwärmung.

Die Flexibilität in der Temperaturführung und in der Ausgestaltung des Erhitzungssystems wird dann erhöht, wenn der Sekundärstrom von der Verbrennungsanlage her durch den einen Wärmetauscher und dann durch den anderen Wärmetauscher führbar ist oder ein erster Teil des Sekundärstroms nur durch den einen Wärmetauscher und ein zweiter Teil des Sekundärstroms nur durch den anderen Wärmetauscher leitbar ist.

Die Fluidführung wird auch erleichtert, wenn Leitungen, Pumpen und Ventile im Sekundärkreislauf vorhanden sind.

Insbesondere ist es von Vorteil, wenn am Ende der Bypassleitung ein Mischventil vorhanden ist, um kaltes, aus einem oder beiden Wärmetauschern zurückfließendes Wärmeleitmedium, dem von der Verbrennungsanlage erwärmten Wärmeleitmedium zuzumischen.

Die Erfindung betrifft ferner auch ein Verfahren zum Erhitzen von Getränken, wobei einerfindungsgemäßes Erhitzungssystem zum Einsatz kommt. Dabei wird eine Verbrennungsanlage zur Erwärmung des Sekundärstroms direkt eingesetzt, wobei es dann keiner Umwege über tertiäre Medien bedarf.

Es ist von Vorteil, wenn der Sekundärkreislauf als geschlossener Sekundärkreislauf ausgebildet ist.

Die Erfindung wird auch nachstehend mit Hilfe einer Zeichnung erläutert. Es sind dabei drei Ausführungsformen dargestellt. Es zeigen:
- Fig. 1: einen Ausschnitt eines schematischen Wirkprinzips eines ersten erfindungsgemäßen Erhitzungssystems,
- Fig. 2: einen Ausschnitt aus einer schematisch dargestellten zweiten Ausführungsform eines Erhitzungssystems, und
- Fig. 3: einen Ausschnitt eines Schaltbildes eines dritten erfindungsgemäßen Erhitzungssystems.

Die Figuren sind lediglich schematischer Natur und dienen nur dem Verständnis der Erfindung. Die gleichen Elemente werden mit denselben Bezugszeichen versehen.

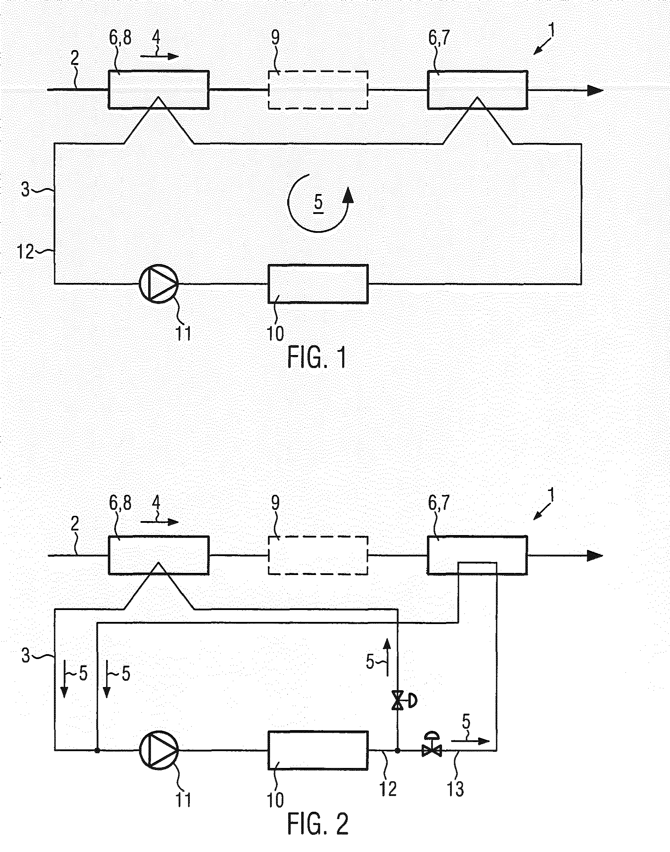

In Fig. 1 ist ein erstes erfindungsgemäße Erhitzungssystem 1 ausschnittsweise dargestellt. Das Erhitzungssystem wird im Rahmen einer Getränkebehandlung, insbesondere einer Kurzerhitzung oder Ultrahocherhitzung, eingesetzt. Für die Erhitzung eines Getränkestroms 2, der Wasser, Milch, Säfte oder ähnliche Flüssigkeiten beinhalten kann, wird ein Sekundärstrom 3 eingesetzt.

Der Getränkestrom 2 fließt in Richtung des Pfeiles 4. Der Sekundärstrom fließt in Richtung des Pfeiles 5 und ist in einem vorzugsweise geschlossenen Sekundärkreislauf gefangen. Der Sekundärstrom an Wärmeleitmedium, wie z. B. Wasser und/oder Dampf, durchfließt einen Wärmetauscher 6.

In Fig. 1 sind zwei Wärmetauscher 6 dargestellt, wobei es möglich ist, jedoch nur einen einzusetzen. Werden zwei oder mehr Wärmetauscher, wie in dem Ausführungsbeispiel gemäß Fig. 1 eingesetzt, so wird der von dem Sekundärstrom 3 zuerst durchflossene Wärmetauscher 6 als erster Wärmetauscher 7 bezeichnet und der von dem Sekundärstrom 3 danach durchflossene Wärmetauscher 6 als zweiter Wärmetauscher 8 bezeichnet.

Der zweite Wärmetauscher 8 führt zu einer Vorerwärmung des Getränkestroms 2, wohingegen der erste Wärmetauscher 7 zu einer Nacherwärmung auf eine gewünschte Endtemperatur des Getränkestroms 2 führt. Grundsätzlich ist es möglich, zwischen den beiden Wärmetauschern 7 und 8 einen weiteren Wärmetauscher, der auf dem Rekuperationsprinzip arbeitet, einzusetzen. Dieser zusätzliche Wärmetauscher ist mit dem Bezugszeichen 9 versehen.

In Flussrichtung des Sekundärstroms 3 gesehen vor dem ersten Wärmetauscher 7 ist eine Verbrennungsanlage 10 im Sekundärkreislauf angeordnet. Die Verbrennungsanlage 10 ist eine Gastherme, welche beim Verbrennen von Gas Wärme an den Sekundärstrom 3 weitergibt. Die Verbrennungsanlage 10 heizt den Sekundärstrom auf 140 °C bis 160 °C auf. Zwischen dem zweiten Wärmetauscher 8 und der Verbrennungsanlage 10 ist eine Pumpe 11 in der entsprechenden Leitung 12 vorhanden.

In Fig. 2 ist ein zweites Ausführungsbeispiel eines zweiten erfindungsgemäßen Erhitzungssystems 1 dargestellt. Dabei teilt sich die Leitung 12 hinter der Verbrennungsanlage 10 in zwei Stränge auf. Ein erster Strang 13 führt alle Teile des Sekundärstroms 3 zum ersten Wärmetauscher 7, wohingegen ein zweiter Strang 14 einen weiteren Teil des Sekundärstroms 3 zu dem zweiten Wärmetauscher 8 führt.

Die beiden Stränge 13 und 14 vereinen sich dann wieder kurz vor der Pumpe 11, welche dann den Sekundärstrom in die Verbrennungsanlage 10 weiterleitet.

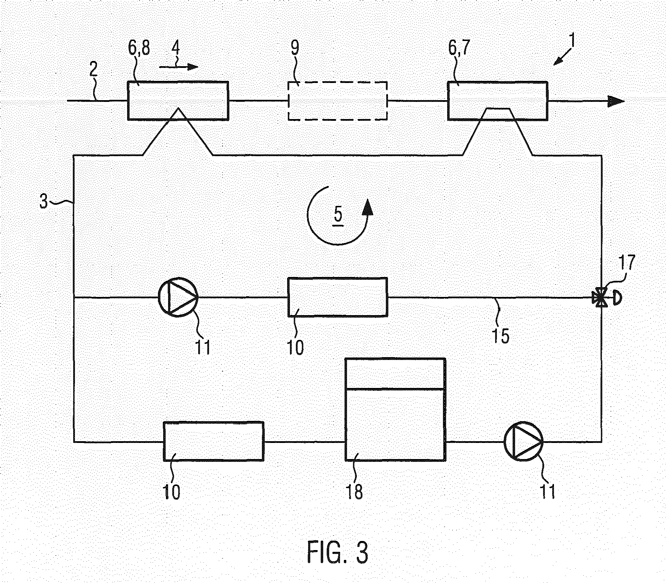

In Fig. 3 ist eine weitere Ausführungsform eines erfindungsgemäßen Erhitzungssystems dargestellt, wobei eine Bypassleitung 15 in dem Sekundärkreislauf angeordnet ist.

In der Bypassleitung 15 ist eine weitere Pumpe 16 vorhanden, wobei am Ende der Bypassleitung 15, gegenüberliegend der Pumpe 16, ein Dreiwege-Mischventil 17 angeordnet ist. Mittels des Mischventils 17 wird durch die beiden Wärmetauscher 7 und 8 geflossenes Medium des Sekundärstroms 3 in abgekühltem Zustand wieder kurz vor dem ersten Wärmetauscher 6, unter Umgehung der Verbrennungsanlage 10 eingespeist. In Strömungsrichtung 5 gesehen hinter der Verbrennungsanlage 10 folgen ein Speicher 18 und die Pumpe 11 aufeinander. Der Speicher 18 kann auch als Puffer ausgebildet sein. Der Speicher 18 oder Puffer kann auch als Schichtspeicher ausgebildet sein.

Es ist auch möglich, die einzelnen Facetten der drei Ausführungsbeispiele miteinander zu kombinieren, um die Variabilität zu erhöhen.

## Patentansprüche

1. Erhitzungssystem (1) für eine Getränkeverarbeitungsanlage, mit einem Getränkestrom (2) aus einem zu verarbeitendem Getränk, mit einem Sekundärstrom (3) aus einem Wärmeleitmedium, wobei der Sekundärstrom (3) in einem Sekundärkreislauf geführt ist, mit zumindest einem Wärmetauscher (6), der von dem Sekundärstrom (3) durchflossen ist und so angeordnet ist, dass er in der Lage ist, Wärme an den Getränkestrom (2) abzugeben, **dadurch gekennzeichnet, dass** eine Verbrennungsanlage (10) in dem Sekundärstrom (3) so angeordnet ist, dass von der Verbrennungsanlage (10) erzeugte Wärme an das Wärmeleitmedium weitergebbar ist.

2. Erhitzungssystem (1) nach Anspruch 1, **dadurch gekennzeichnet, dass** die Verbrennungsanlage (10) als Gastherme ausgebildet ist.

3. Erhitzungssystem (1) nach einem der Ansprüche 1 oder 2, **dadurch gekennzeichnet dass** eine Bypassleitung (15) so an den Sekundärstrom (3) angeschlossen ist, dass ein Teil oder das gesamte Wärmeleitmedium an der Verbrennungsanlage (10) so vorbeiführbar ist, dass es durch die Verbrennungsanlage (10) unerwärmt bleibt.

4. Erhitzungssystem (1) nach einem der Ansprüche 1 bis 3, **dadurch gekennzeichnet, dass** im Sekundärkreislauf (3) ein Speicher (18) und/oder ein Puffer vorhanden ist, in dem das durch die Verbrennungsanlage (10) erwärmte Wärmeleitmedium, vorzugsweise vor Eintritt in den zumindest einen Wärmetauscher (6), zwischenspeicherbar und/oder pufferbar ist.

5. Erhitzungssystem (1) nach einem der Ansprüche 1 bis 4, **dadurch gekennzeichnet, dass** das Wärmeleitmedium Wasser, etwa Heißwasser, und/oder Dampf, etwa Sattdampf, ist.

6. Erhitzungssystem (1) nach einem der Ansprüche 1 bis 5, **dadurch gekennzeichnet, dass** zwei von dem Sekundärstrom (3) durchflossene Wärmetauscher (6) in Wirkeingriff mit dem Getränkestrom (2) stehen.

7. Erhitzungssystem (1) nach Anspruch 6, **dadurch gekennzeichnet, dass** der Sekundärstrom (3) von der Verbrennungsanlage (10) erst durch den einen Wärmetauscher (7) und dann durch den anderen Wärmetauscher (8) führbar ist oder ein erster Teil des Sekundärstroms (3) nur durch den einen Wärmetauscher (7) und ein zweiter Teil des Sekundärstroms (3) nur durch den anderen Wärmetauscher (8) leitbar ist.

8. Erhitzungssystem (1) nach Anspruch 7, **dadurch gekennzeichnet, dass** zur entsprechenden Fluidführung Leitungen (12), Pumpen (11,16) und Ventile (17) im Sekundärkreislauf (3) vorhanden sind.

9. Erhitzungssystem (1) nach einem der Ansprüche 3 bis 8, **dadurch gekennzeichnet, dass** am Ende der Bypassleitung (15) ein Mischventil (17) vorhanden ist, um kaltes, aus einem oder beiden Wärmetauschern (7, 8) zurückfließendes, Wärmeleitmedium dem von der Verbrennungsanlage (10) erwärmten Wärmeleitmedium zuzumischen.

10. Verfahren zum Erhitzen von Getränken mit einer Verbrennungsanlage in einem Erhitzungssystem (1) nach einem der Ansprüche 1 bis 9.
